# EUROPEAN PATENT SPECIFICATION

(11) **EP 0 526 774 B1**
(45) Date of publication and mention of the grant of the patent: **20.03.1996**
(21) Application number: 92111921.0
(22) Date of filing: 13.07.1992
(51) Int. Cl.: H02K 41/02, H02K 57/00, H02K 5/16, B01F 15/00, G01C 19/04

(54) **Electric motor having a spherical rotor and its application apparatus**
Elektrischer Motor mit einem sphärischen Läufer und seine Anwendungsvorrichtung
Moteur électrique comportant un rotor sphérique et son appareil d'application

(30) Priority: 30.08.1991 JP 220001/91; 13.11.1991 JP 297251/91; 31.07.1991 JP 60422/91 U; 29.08.1991 JP 218567/91
(43) Date of publication of application: 10.02.1993
(73) Proprietor: MITSUBISHI JUKOGYO KABUSHIKI KAISHA, Tokyo (JP)
(72) Inventor: Nakanishi, Teruo, c/o Nagoya Guidance, Komaki-shi, Aichi-ken (JP); Ando, Yohei, c/o Nagoya Guidance, Komaki-shi, Aichi-ken (JP); Sakakibara, Kiyokatsu, c/o Nagoya Guidance, Komaki-shi, Aichi-ken (JP); Adachi, Mitsukane, c/o Nagoya Guidance, Komaki-shi, Aichi-ken (JP)
(74) Representative: Henkel, Feiler, Hänzel & Partner

(56) References cited:
- EP-A- 0 113 267
- US-A- 4 908 558
- PATENT ABSTRACTS OF JAPAN vol. 12, no. 85 (E-591) 17 March 1988 & JP-A-62 221 856
- PATENT ABSTRACTS OF JAPAN vol. 11, no. 36 (E-477) 3 February 1987 & JP-A-61 203 860
- PATENT ABSTRACTS OF JAPAN vol. 10, no. 50 (E-384)(2107) 27 February 1986 & JP-A-60 204 252

## Description

### BACKGROUND OF THE INVENTION:

The present invention relates to an electric motor having a spherical rotor, which is available for driving an optical sensor, a control moment gyro, an inductive detector device or an electromagnetic wave transmitter of an aircraft, a flying object or the like, or a visual sensor of a robot, and its application apparatus.

A multi-freedom electric motor of the above type corresponding to the preamble of appended claim 1 is known from document EP-A-0 113 267. In this known motor the rotor may take the form of a hollow spherical shell while the stator is provided with three electromagnet means, each comprising a laminated core with stator poles and windings of a conventional type and adapted to provide a driving force to rotate the rotor about a respective one of three mutually orthogonal axes. The electromagnet means may be energised by a controller in response to rotor position signals from position sensors associated with respective axes. These position sensors comprise a complex mechanical structure involving a physical link between rotor and stator. The outer surface of the rotor may be provided with grooves defining studs arranged so as to produce, with the stator poles, an electromagnetic Vernier effect and the intervals between the studs may be filled with permanent magnets or energising coils. However, EP-A-0 113 267 is silent as to the precise arrangement of these rotor permanent magnets and as to the manner of energising the stator electromagnets in conjunction with such a permanent-magnet rotor.

In another multi-freedom motor known from the document JP-A-60 204 252 a stator in the form of a spherical shell has a spherical rotor supported therewithin for free rotation. The stator is provided with three windings adapted to produce, when energised, rotation of the rotor about respective mutually orthogonal axes. Permanent magnets are provided in the interior of the rotor for interacting with the stator coils.

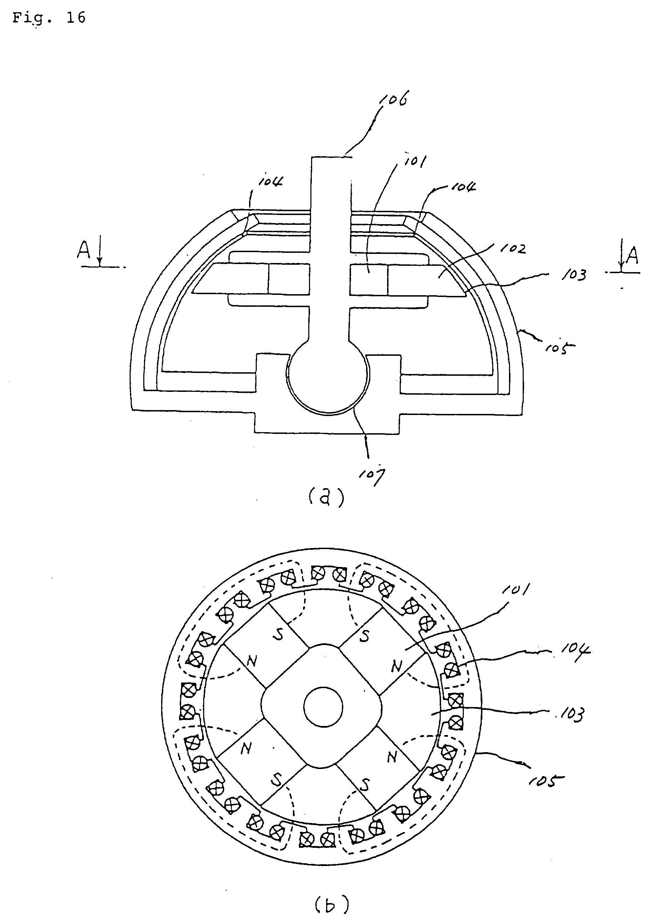

As an electric motor having a spherical rotor in the prior art, a "spherical surface motor" which is representative of multi-freedom electric motors disclosed in a Japanese patent application filed on March 22, 1986 (Laid-Open Japanese Patent Specification No. 62-221856 (1987)), has been known. This motor comprises, as shown in Fig. 16(a), a hemispherical rotor 103 consisting of permanent magnets 101 or of permanent magnets 101 and yokes 102, a stator 105 having a plurality of windings 104 arrayed on a hemispherical surface and a spherical bearing 107 for rotatably supporting an output shaft 106 on the stator 105, and as shown in Fig. 16(b), a driving torque of any arbitrary direction was generated in the above-mentioned hemispherical rotor 103 by controlling a current flowing through the respective windings 104 of the above-mentioned stator 105 in a magnetic field produced by the permanent magnets 101 whose N-poles and S-poles are arranged along the surface of the above-mentioned hemispherical rotor 103.

In the "spherical surface motor" which is representative of multi-freedom electric motors in the prior art, a swing angle of a rotor shaft was narrow due to its structural restrictions, there were many movable parts, hence its mechanism was complex, and a space within the rotor was also small.

### SUMMARY OF THE INVENTION:

It is therefore one object of the present invention to provide a multi-freedom electric motor, which can be designed in small size, and in which an operation range of a rotor is wide and moreover a broad accommodation space for a loaded article is reserved within a rotor, and also to provide various application instruments having their capabilities enhanced and their structures simplified by making use of this multi-freedom electric motor.

According to one aspect of the present invention there is provided a multi-freedom electric motor having spherical motor means, including a rotor having a plurality of permanent magnets disposed on its outer surface so that the polarities of respective adjacent magnetic poles or groups of magnetic poles of the permanent magnets differ from one another, and a stator provided on a certain part along the outer surface of said rotor and having a plurality of electromagnets disposed on its inner surface side as opposed to the permanent magnets on the outer surface of said rotor, wherein: provision is made such that said rotor may be rotated about a displaceable rotary axis by controlling electric currents flowing through the respective electromagnets; the surface of said rotor is of completely true spherical shape, and said electric motor includes a spherical bearing coupled to said stator for rotatably supporting the outer surface of said rotor, characterised in that said permanent magnets are disposed contiguously in a lattice form and embedded in the surface of the rotor, said rotor has a position detector provided therein, the direction of the magnetic field generated by the permanent magnets is a normal direction with respect to said rotor, the polarities of adjacent magnetic poles of the permanent magnets are reversed, the electromagnets are disposed in a lattice form with the intervals between them being chosen to be somewhat smaller than the intervals between the permanent magnets, the direction of the magnetic field generated by the electromagnets is a normal direction with respect to said rotor, and the feed of the electric currents flowing through the respective electromagnets is turned on and off by a control signal based on a driving signal and a positional signal obtained from said position detector.

In an alternative embodiment of the invention the electromagnets and the permanent magnets may be interchanged.

Advantageously the rotor may be provided in a spherical shell shape and a wide accommodation space for a loaded article provided within the rotor.

Owing to the above-described structural features, the electric motor having a spherical rotor according to the present invention operates in the following manner. That is, when an operating direction command signal for the rotor has been input to the controller, the controller calculates electromagnetic forces to be generated by the respective electromagnets in the stator or the rotor, thus determines magnitudes of the currents to be made to flow through the respective electromagnets, and feeds the currents. The electromagnetic forces generated by the electromagnets as a result of this feeding of currents, would act upon the permanent magnets provided on the surface of the rotor or the stator.

Since the above-mentioned rotor is rotatably supported by the spherical bearing, it is driven when the electromagnetic forces act upon the above-mentioned permanent magnets, the rotor performs rotation in the predetermined direction based on the above-mentioned operating direction command signal.

According to the present invention, because of the fact that permanent magnets or electromagnets are disposed on the almost entire surface of the outer surface of the spherical rotor and the magnetic forces of the electromagnets or permanent magnets of the stator are adapted to act upon a part of the either magnets of the rotor, the rotor has a wide operation range, and also because of the fact that the rotor has a simple structure provided with either permanent magnets or electromagnets on its outer surface, it is possible to reserve a space within the rotor and to utilize the space.

As described above, according to the present invention, a multi-freedom electric motor, in which a rotor has a wide operation range and a broad accommodation space for a loaded article is reserved within the rotor, can be realized.

According to an additional feature of the present invention, there is provided a space stabilizing apparatus employing the motor of the invention in accordance with the appended claim 4.

Furthermore, according to another additional feature of the present invention, there is provided a control moment gyro employing the motor of the invention in accordance with the appended claim 8.

Also, according to still another additional feature of the present invention, there is provided an agitator according to the appended claim 9 and an agitating apparatus according to the appended claim 10 employing the motor of the invention.

The above-mentioned and other objects, features and advantages of the present invention will become more apparent by reference to the following description of preferred embodiments of the invention taken in conjunction with the accompanying drawings.

### BRIEF DESCRIPTION OF THE DRAWINGS:

In the accompanying drawings:
Fig. 1 is a schematic view of an electric motor having a spherical rotor according to a first preferred embodiment of the present invention;
Fig. 2 is a cross-section view of the spherical rotor according to the aforementioned first preferred embodiment;
Fig. 3 is an illustration of arrangement of permanent magnets on the outer surface of the spherical rotor according to the above-mentioned first preferred embodiment;
Fig. 4 is a schematic view for explaining a scope of mounting of permanent magnets on the outer surface of the spherical rotor according to the aforementioned first preferred embodiment;
Fig. 5 is a schematic view of the stator according to the above-mentioned first preferred embodiment;
Fig. 6 is a functional block diagram of a controller according to the above-described first preferred embodiment;
Fig. 7 is a cross-section view of an orientation control device of a camera, to which an electric motor having a spherical rotor according to a second preferred embodiment of the present invention is applied;
Fig. 8 is a cross-section view of an electric motor having a spherical rotor, which makes use of a magnetic bearing according to a third preferred embodiment of the present invention;
Fig. 9 is a cross-section view of an electric motor having a spherical rotor making use of a slide bearing according to a fourth preferred embodiment of the present invention;
Fig. 10 is a cross-section view of an electric motor having a spherical rotor making use of a roller bearing according to a fifth preferred embodiment of the present invention;
Fig. 11 is a side view partly cut away of one example of a mixer making use of the electric motor according to the present invention as a drive source.
Fig. 12 is a perspective view showing a construction of a sixth preferred embodiment of the present invention;
Fig. 13 is a functional block diagram of the sixth preferred embodiment;
Fig. 14 is a schematic view showing a construction of a control moment gyro according to a seventh preferred embodiment of the present invention;
Fig. 15 is an illustration of a three-dimensional agitator according to an eighth preferred embodiment of the present invention, Fig. 15(a) is a perspective view, and Fig. 15(b) is a vertical cross-section view;
Fig. 16 is an illustration of one example of a spherical motor in the prior art, Fig. 16(a) is a vertical cross-section view, and Fig. 16(b) is a horizontal cross-section view taken along line A-A as viewed in the direction of arrows; and
Fig. 17 is a schematic view showing a construction of a control moment gyro in the prior art.

### DESCRIPTION OF THE PREFERRED EMBODIMENTS:

### (Preferred Embodiment 1)

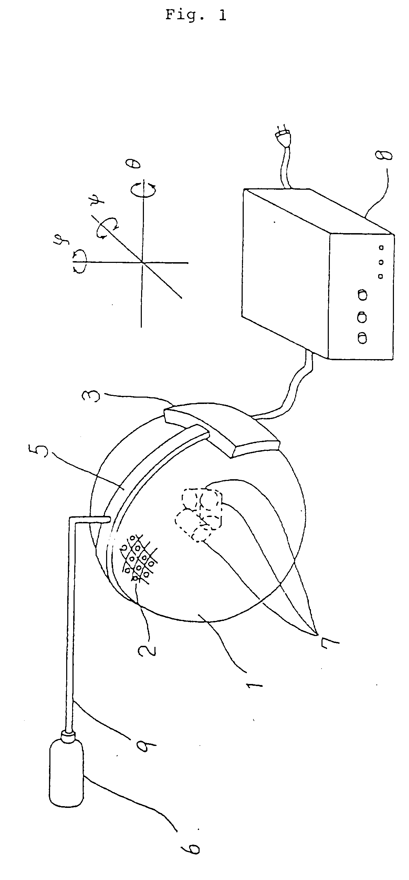

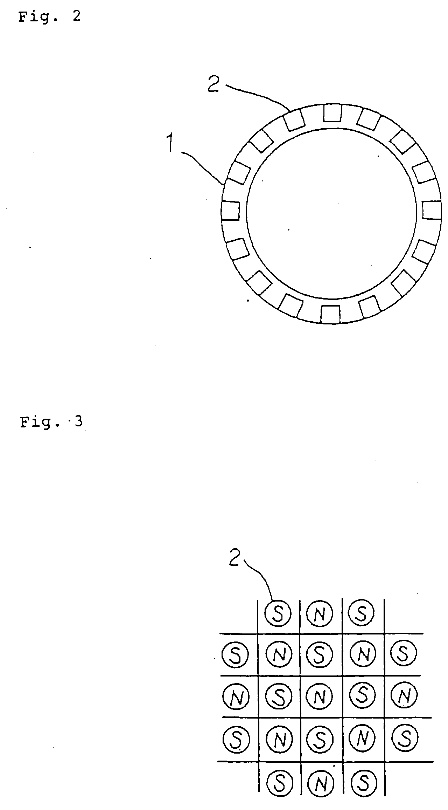

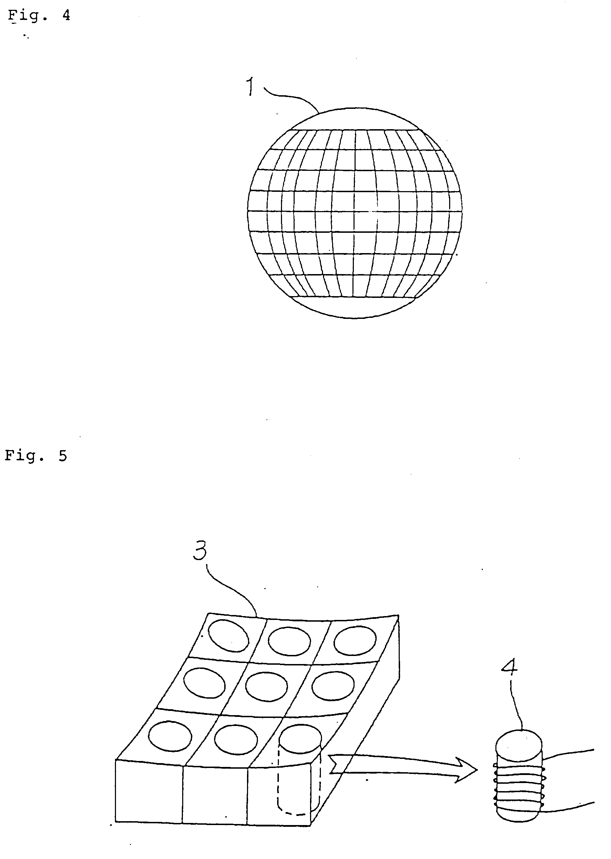

An electric motor having a spherical rotor according to a first preferred embodiment of the present invention is illustrated in Fig. 1. In this figure, reference numeral 1 designates a spherical rotor, which has a hollow spherical shape as shown in Fig. 2. On the outer surface of the spherical rotor 1 are mounted a plurality of permanent magnets 2 in a lattice form with polarities of adjacent magnetic poles differing from one another as shown in Fig. 3. However, the scope of mounting of the permanent magnets 2 excludes the polar portions of the spherical rotor 1, where arrangement with adjacent magnetic poles having different polarities from one another is impossible, as shown in Fig. 4.

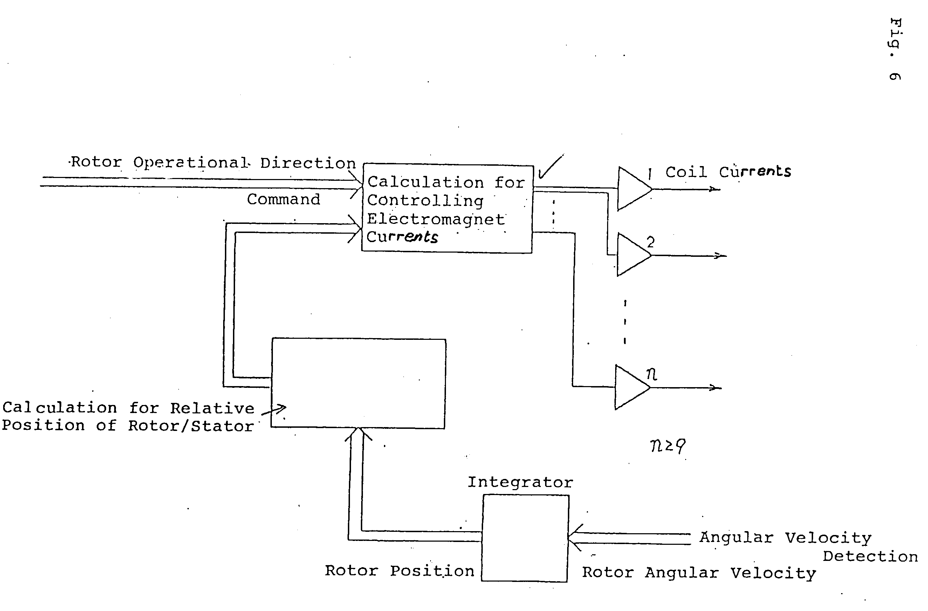

Reference numeral 3 designates a stator provided outside of the above-mentioned spherical rotor 1, on its inside surface opposed to the surface of the spherical rotor 1 are disposed electromagnets 4 in a lattice form and in a spherical array as shown in Fig. 5, and the interval between the electromagnets 4 of the above-mentioned stator 3 is chosen to be 2/3 of an average value of the intervals between the permanent magnets 2 of the spherical rotor 1.

Reference numeral 5 designates a hydrostatic bearing (spherical bearing) coupled to the aforementioned stator 3 and surrounding one round of the outer circumference of the above-described spherical rotor 1, which is pressurized by a pressure of gas supplied from a pressurized gas bomb 6 via a pressurizing pipe 9. This hydrostatic bearing 5 makes use of the spherical surface of the spherical rotor 1 as a part of a spherical bearing, and the spherical rotor is held in a non-contact manner.

Reference numeral 7 designates an angular velocity detector for detecting three coordinate components of an angular velocity, the angular velocity signals are sent to a controller 8 as will be described later via wirings not shown, and in this controller the position of the spherical rotor 1 is detected by integrating the angular velocity signals. In addition, on the basis of these position signals, a relative position of the spherical rotor 1 with respect to the stator 3 is calculated.

Reference numeral 8 designates a controller, which is connected to the respective electromagnets 4 of the above-mentioned stator 3 and the angular velocity detector via wirings.

In the above-described arrangement, the controller 8 operates as illustrated by the functional block diagram in Fig. 6, and controls the electromagnets 4 of the stator 3. More particularly, at first an operational direction command signal (or a force direction command signal) of the spherical rotor 1 and angular velocity signals of the spherical rotor 1 are input to the controller 8. The controller 8 having these signals input integrates the latter input signals to convert them into position signals, and calculates a relative position of the spherical rotor 1 with respect to the stator 3 by making use of these position signals. Electromagnetic forces to be generated by the respective electromagnets 4 are calculated according to these relative position signals and the operational direction command signal (or the force direction command signal) on the basis of a logic sequence corresponding to a magnetic field condition, thus values of currents to be fed to the respective electromagnets 4 are calculated, and the currents are supplied.

Since the coupling between the above-mentioned stator 3 and spherical rotor 1 relies upon the hydrostatic bearing 5 which keeps the spherical rotor 1 in a floating condition by means of the pressure of the gas supplied from the pressurized gas bomb 6, the spherical rotor 1 is freely rotatable in any direction. Therefore, if electromagnetic forces are generated at the respective electromagnets 4 of the stator 3, they act upon the magnetism of the permanent magnets 2 of the spherical rotor 1 to cause the spherical rotor 1 to perform predetermined actions. It is to be noted that the reason why the interval between the electromagnets 4 of the stator 3 is chosen to be 2/3 times an average value of the intervals between the permanent magnets 2 of the spherical rotor 1, is because of the purpose of generating driving forces at the spherical rotor 1. In addition, owing to the fact that on the side of the rotor are disposed permanent magnets 2 which do not necessitate wirings, an especially broad space can be reserved within the rotor, and also since its movement is not restricted by wirings, rotational movement over a very broad range becomes possible.

As described above, an apparatus in which an operation range of a rotor is broad, a broad accommodation space for loaded articles is reserved within a rotor, and continuous multi-freedom operations in any arbitrary direction can be achieved with a simple mechanism, has been realized.

It is to be noted that while the permanent magnets 2 on the rotor side were disposed in a lattice-shaped array and consequently in its polar portions were not disposed permanent magnets 2 in this preferred embodiment, it is also possible to array the permanent magnets 2 over the entire surface of the rotor, for instance, by arranging areas of permanent magnets 2 in a pattern of soccer ball surface.

### (Preferred Embodiment 2)

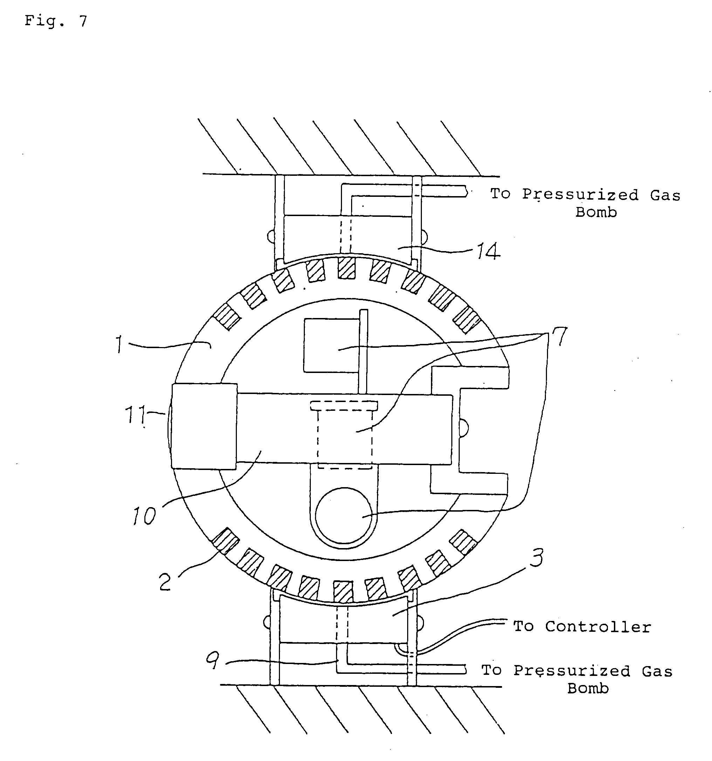

A second preferred embodiment of the present invention is illustrated in Fig. 7. In this preferred embodiment, a spherical bearing 14 is disposed at a symmetrical position to a stator 3 with a spherical rotor 1 placed therebetween, also a camera 10 (a picture camera, an infrared ray camera, etc.) is contained in the spherical rotor 1 by making use of a mounting space within the spherical rotor 1, and the electric motor having the spherical rotor is utilized as an orientation control apparatus for the camera 10.

In the above-described embodiment, the camera 10 is fixed to the hollow section inside of the spherical rotor 1, the spherical rotor 1 supported by the stator 3 and the spherical bearing 14 is caused to swing by controlling the currents fed to the respective electromagnets 4 on the stator 3, according to this swing motion the orientation of the camera 10 is arbitrarily varied, and photographing is effected through a lens 11. In this case, the rotor position signals used for phase detection between the spherical rotor 1 and the stator 3 can be used also for the purpose of feedback for the purpose of position control. As exemplified by this preferred embodiment, by assembling a camera 10 within a spherical rotor 1, it becomes possible to widely and arbitrarily change a field of view of the camera 10 without employing a complicated gimbal mechanism, and also to be formed of an extremely simple and small-sized structure despite of such excellent capabilities.

### (Preferred Embodiment 3)

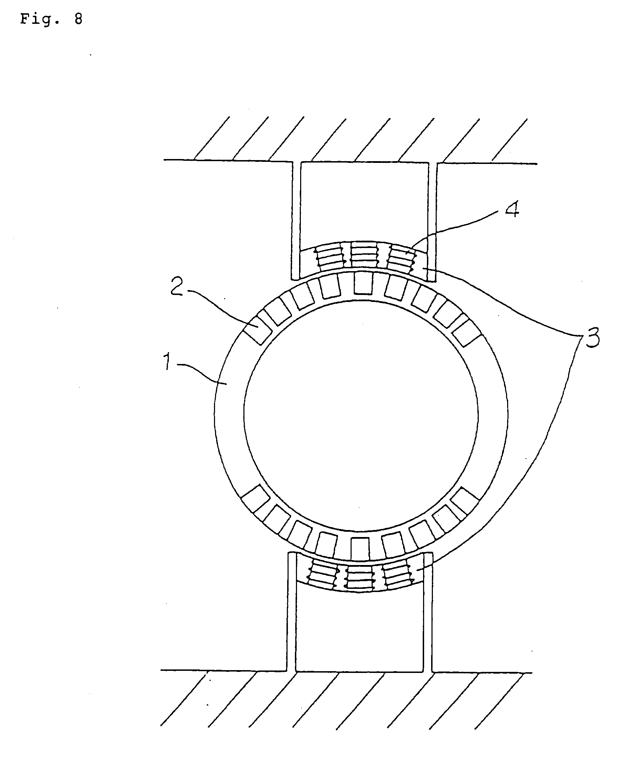

A third preferred embodiment of the present invention is illustrated in Fig. 8. This preferred embodiment shown in Fig. 8 is the case of an electric motor having a spherical rotor, wherein in place of the hydrostatic bearing 5 of the first preferred embodiment, a magnetic bearing formed by the electromagnets 4 of the stators 3 is used.

In the above-described embodiment, the stators 3 are opposed at the positions symmetric to each other with respect to the center of the spherical rotor 1. Since the magnetic forces generated between the electromagnets 4 of the stators 3 and the permanent magnets 2 in the spherical rotor 1 are decomposed into forces directed towards the center of the spherical rotor 1 and forces (torques) directed in the tangential direction of the spherical rotor 1, by controlling not only the latter forces but also the former forces with respect to the two opposed stators 3, it is possible to cause the stators 3 to have a function of a magnetic bearing.

In addition, according to this construction, as the stators 3 are provided double, the torque can be also doubled.

### (Preferred Embodiment 4)

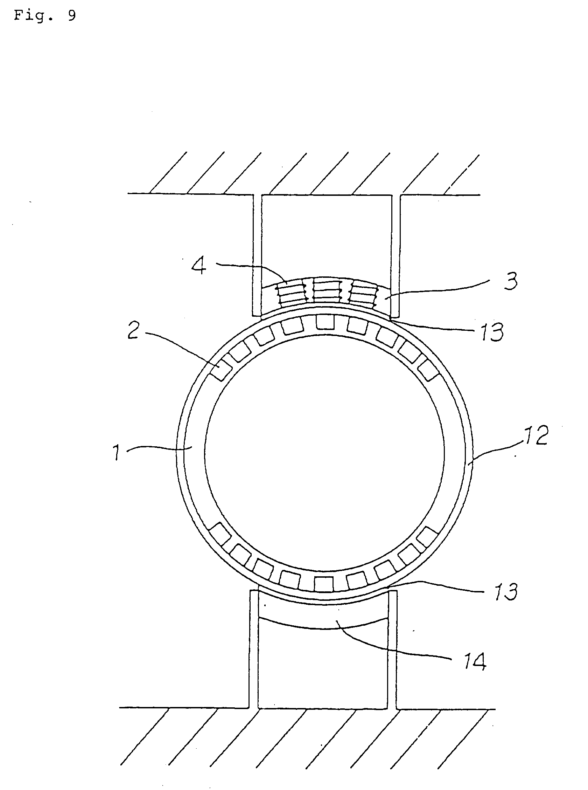

A fourth preferred embodiment of the present invention is shown in Fig. 9. This preferred embodiment shown in Fig. 9 is the case of an electric motor having a spherical rotor, wherein in place of the hydrostatic bearing 5 of the first preferred embodiment, a sliding bearing is used.

In the above-described embodiment, thin film coatings 12 and 13 of resin are applied over the respective surfaces of the spherical rotor 1 and the stator 3. Also, at a position symmetric to the stator 3 with respect to the center of the spherical rotor 1 is disposed a spherical bearing 14, and like the stator 3 this spherical bearing 14 is applied with a coating. In this preferred embodiment, adjustment of frictional forces can be achieved by holding a constant surface pressure as a result of positional adjustment of the stator 3 and the spherical bearing 14.

### (Preferred Embodiment 5)

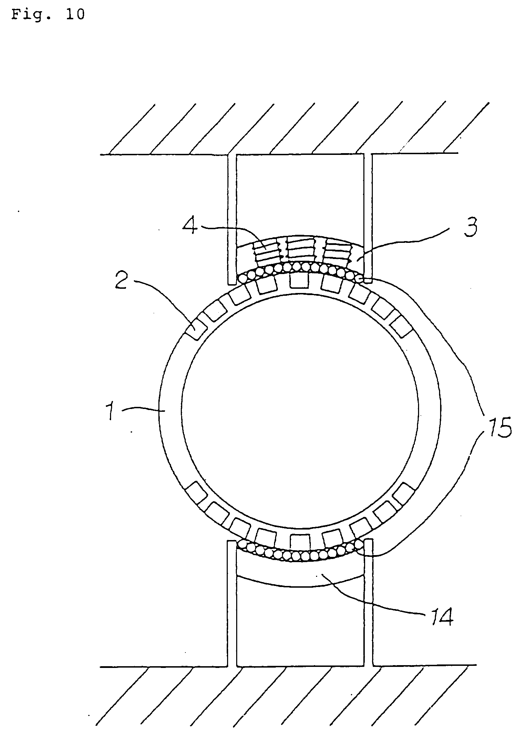

A fifth preferred embodiment of the present invention is illustrated in Fig. 10. This preferred embodiment shown in Fig. 10 is the case of an electric motor having a spherical rotor, wherein in place of the hydrostatic bearing 5 of the first preferred embodiment, a roller bearing is used.

In the above-described embodiment, the spherical rotor 1 is held by inserting rolling bearings between the spherical rotor 1 and the stator 3 and between a spherical bearing 14 disposed at a position symmetric to the stator 3 with respect to the center of the spherical rotor 1 and the rotor 1.

With respect to the above-described rolling bearings 15, if their material is chosen to be magnetic material, a magnetic resistance is reduced, and thereby an efficiency of generating a driving force can be improved.

It is to be noted that while permanent magnets are provided in the spherical rotor 1 and electromagnets 4 are disposed on the stator 3 in every one of the above-described first to fifth preferred embodiments, it is also possible to dispose electromagnets 4 on a spherical rotor 1 and to dispose permanent magnets 2 on a stator 3. Since replacement of permanent magnets 2 for electromagnets 4 and vice versa in these preferred embodiments is self-evident for those skilled in the art, further detailed explanation thereof will be omitted.

As described above in connection to a number of preferred embodiments, the electric motor having a spherical rotor according to the present invention can realize a multi-freedom electric motor, which is simple in structure and can be small-sized, and in which damage would hardly occur, an operation range of the rotor is wide, and moreover a broad accommodation space for a loaded article is reserved within the rotor.

The use of the multi-freedom electric motor according to the present invention is broad, and as one example of the use, it can be used as a drive power source of an agitator as will be described in the following.

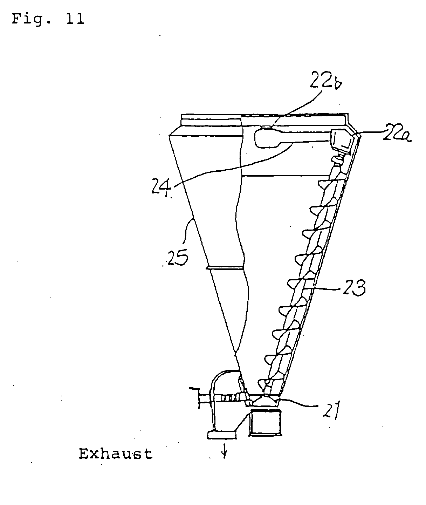

Fig. 11 shows one example of a mixer making use of a 3-freedom motor. In this figure, reference numeral 21 designates a multi-freedom motor provided at the bottom of the inside of a container 25 of inverse-cone shape, numeral 23 designates an agitating screw having its bottom end connected to the above-mentioned multi-freedom motor 21 and its top end connected to a bearing 22a, to the above-mentioned bearing 22a is connected one end of an arm 24, and the other end thereof is connected to another bearing 22b provided at the top of the inside of the container 25.

In the multi-freedom motor 21, if electromagnetic forces are generated at respective electromagnets of a stator, then they act upon the magnetisms of permanent magnets of a spherical rotor, and the spherical rotor is driven in the direction instructed by an operational direction command signal and rotates.

In the above-described operational direction command signal are included a command for making the agitating screw 23 rotate about its own axis and a command for making the same agitating screw 23 revolve along the side wall of the container 25, so that the spherical rotor in the motor 21 causes the agitating screw 23 to rotate about its own axis, and also to revolve along the side wall of the container 25.

As described above, by employing a multi-freedom motor according to the present invention, a ratio of a spinning speed to a revolving speed of the screw can be chosen arbitrarily, and by adjusting this ratio depending upon the material to be agitated, optimum mixing of the material to be agitated can be realized.

### (Preferred Embodiment 6)

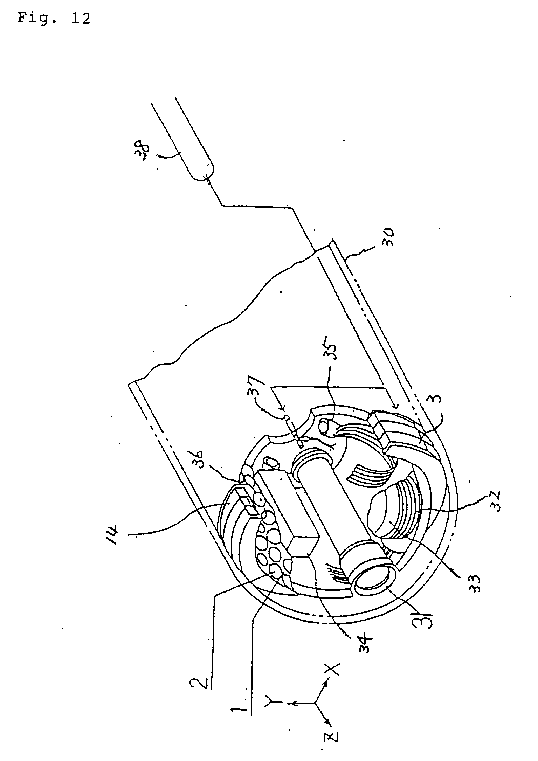

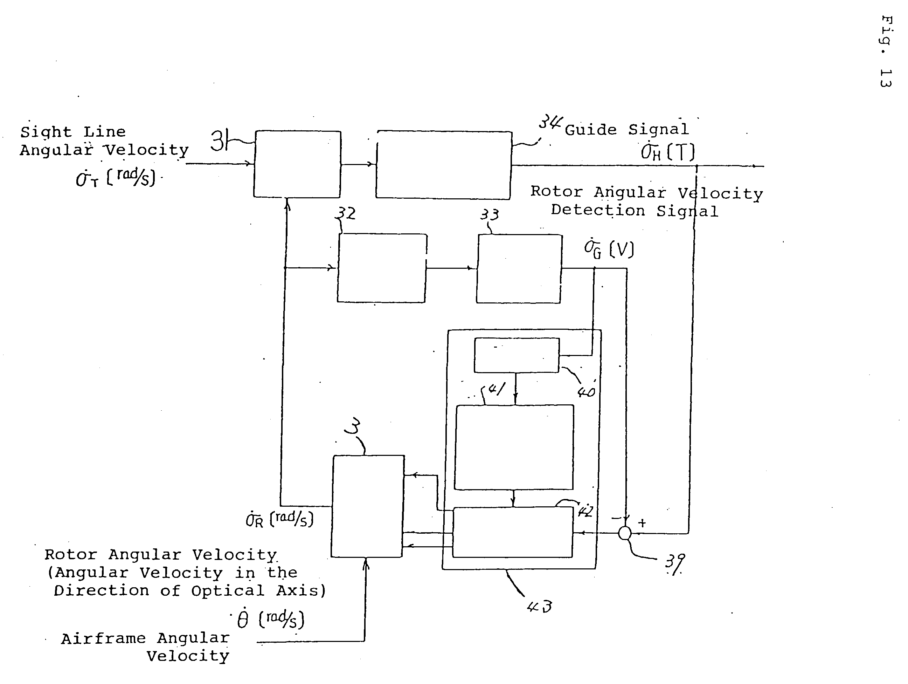

Next, as another preferred embodiment of the present invention, description will be made on a space stabilizer constructed by making use of the above-described electric motor having a spherical rotor provided according to the principal feature of the present invention with reference to Figs. 12 and 13. In this connection, the space stabilizer is an apparatus for stabilizing a guidance detector (a visual sensor of a robot, an infrared-ray camera or the like) or an electromagnetic wave transmitter so as to take a spatially stable attitude despite movement of an airframe such as rocking or rotation of an airframe in an aircraft or a flying object.

Heretofore, as a space stabilizer for such purpose, a gimbal mechanism that is rotatable independently about three axes orthogonal to one another, was employed. Accordingly, the space stabilizer in the prior art necessitated a complicated mechanical construction and also necessitated a broad loading space, and its operation range (swing angle) was also limited. Moreover, because of dimensional restriction to the motor for driving the gimbal mechanism, a high output motor could not be loaded.

In Fig. 12, at a head portion of a flying object 30 is coaxially provided an annular hydrostatic bearing 14. Within the same bearing 14 is disposed a spherical rotor 1 consisting of a spherical shell having a plurality of permanent magnets 2 so as to be able to freely perform multi-freedom rotation without friction with a predetermined clearance maintained therebetween owing to a hydrostatic pressure. Also, a stator 3 having a plurality of electromagnets is provided as opposed to the spherical rotor 1.

The construction of the spherical rotor 1 is similar to that of the first preferred embodiment explained above with reference to Figs. 2 to 4, and the construction of the stator 3 is similar to that of the first preferred embodiment explained above with reference to Figs. 5 and 7.

Within the spherical rotor 1 is disposed an infrared-ray camera 31 coaxially with the Z-axis penetrating through the rotor 1 so as to pass its center. Also, within the spherical rotor 1 are provided optical fiber gyros 32 for the X-axis, Y-axis and Z-axis, respectively.

In Fig. 12, reference numeral 33 designates a gyro controller provided within the spherical rotor 1, numeral 34 designates a video signal processor, and numeral 35 designates an accumulator. In addition, reference numeral 36 designates a hydrostatic bearing seal, numeral 37 designates a coolant piping for cooling the infrared-ray camera 31, and numeral 38 designates a pressurized air bomb connected to the hydrostatic spherical bearing 14 and the coolant piping 37.

A functional block diagram for the above-mentioned apparatus is shown in Fig. 13. An output of the infrared-ray camera 31 is sent via the video signal processor 34 to an addition input of an adder 39. Also, an output of the optical fiber gyro 32 is sent via the gyro controller 32 to a subtraction input of the adder 39. Furthermore, an output of the gyro controller 32 is sent to a control-calculator 42 via an integrator 40 and a rotor/stator relative position calculator 41, sequentially. An output of the adder 39 is sent to the control-calculator 42. Further, an output of the control-calculator 42 is sent to the stator 3. The integrator 40, the rotor/stator relative position calculator 41 and the control-calculator 42 jointly form a controller 43.

In the above-described construction, owing to the pressurized air supplied from the pressurized air bomb 38, the spherical rotor floats up on the hydrostatic spherical bearing 14 as spaced at a predetermined interval so as to arbitrarily make multi-freedom rotation.

A signal detected by the optical fiber gyro 32 is converted into a rotor angular velocity signal via the gyro controller 33, and the latter is sent to the adder 39 and the controller 43. This angular velocity signal is integrated in the integrator 40 and becomes a rotor position signal. This rotor position signal is calculated in the rotor/stator relative position calculator 41 and converted into a relative position, and then it is sent to the control calculator 42. In addition, an error signal of the guide signal minus the rotor angular velocity signal sent from the adder 39 is transmitted to the control calculator 42. The control calculator 42 transmits positional operation signals to the respective coils of the stator 3 so as to direct the infrared-ray camera 31 of the spherical rotor 1 to a predetermined direction on the basis of these signals. The respective coils are energized by the input signals, thereby rotate the spherical rotor 1 as a multi-freedom motor, and maintain the orientation of the infrared-ray camera 31 in the predetermined direction within the flying object 30.

Since the spherical rotor 1 can perform multifreedom rotation, the operation range is broad, and a high precision can be obtained. Moreover, in addition to the fact that as compared to the apparatuses in the prior art, in these instruments, complicated gimbal mechanisms nor a plurality of motors and controllers have become unnecessary, as a result of the fact that optical fiber gyros and other component parts are contained within the rotor and the spherical rotor and the spherical bearing are integrated, the apparatus becomes very simple and cheap. In addition, since the spherical rotor is coupled via a spherical bearing, in principle there is no limitation to an operation range. Furthermore, as an outer diameter of the rotor can be made large as compared to a general motor, a large generation torque can be obtained, and a space stabilizing capability is improved.

While an example of mounting an infrared-ray camera 31 as a detector has been disclosed in the above description, it is a matter of course that if this infrared-ray camera 31 is replaced by a passive electromagnetic wave radar, a passive sonar or the like, then an electromagnetic wave detector or a sound wave detector having similar effects and advantages to this preferred embodiment can be provided. It is also self-explanatory that likewise if the above-mentioned detector is replaced respectively by an active electromagnetic wave radar, a laser transmitter, a CCD, an active sonar, on the delivery port of a fire extinguisher or a sand blast, then an emitter having similar effects and advantages to this preferred embodiment can be provided. As described above, by loading a detector or a transmitter of an electromagnetic wave, light, a sound wave or the like on the illustrated space stabilizer, a detector having a broad operation range, a good space stability and a larger output for the same space, can be provided.

As the spherical bearing, a magnetic bearing making use of electromagnets, a spherical bearing in which a surface pressure is kept constant by inserting a thin film coating of resin between a rotor and a stator, or a spherical bearing in which a rolling bearing is disposed between a rotor and a stator, could be employed. However, preferably a hydrostatic bearing in which fluid is blown onto a rotor, should be used.

In this preferred embodiment, since an optical fiber gyro is used as the gyro, the apparatus has a merit that it is light in weight and has a small inertia, and also because of a small number of movable mechanical parts it has a long life and it is maintenance free. However, as the gyro, various kinds of gyros could be used depending upon the purposes.

As described above, since the illustrated apparatus is provided with a spherical rotor having a plurality of permanent magnets, a spherical bearing for supporting the rotor so as to arbitrarily perform multi-freedom rotation, there is provided a space stabilizer, in which a mechanism becomes very simple, an operation range is broad, and a high precision as well as a high stability are realized.

### (Preferred Embodiment 7)

Next, as another preferred embodiment of the present invention, description will be made on a control moment gyro (hereinafter abbreviated as CMG) constructed by making use of an electric motor having a spherical rotor according to the present invention.

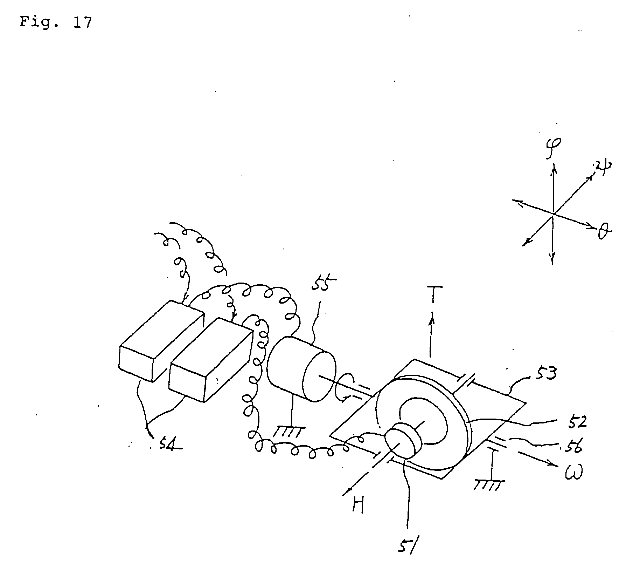

In a heretofore known CMG, as shown in Fig. 17, a flywheel 52 rotating at a high speed about a ψ-axis as driven by a spin motor 51 connected to a controller 54, is supported by means of a gimbal 53, this gimbal 53 is rotated about a θ-axis by means of a gimbal driving motor 55 connected to the controller 54, thus a torque about a φ-axis is obtained as a result of a gyro effect, and by arranging a plurality of such apparatuses, attitude control in an arbitrary space was carried out.

The operation of the above-described CMG in the prior art is as follows:
That is, the flywheel 52 is rotated about the ψ-axis at a constant speed by means of the spin motor 51, and thereby an angular momentum H about the ψ-axis is generated. Furthermore, the gimbal 53 is rotated about the θ-axis at a given velocity, and thereby an angular velocity vector ω about the θ-axis is generated. As a result, a torque of T = H x ω is generated about the φ-axis by a gyro effect, hence the above-described CMG carries out attitude control in an arbitrary space by making use of this torque. It is to be noted that the controller 54 is provided for the purpose of controlling the rotations of the spin motor 51 and the gimbal driving motor 55 on the basis of external instructions, and reference numeral 56 designates a bearing which supports a rotary shaft of the flywheel 52 or the gimbal 53.

In the heretofore known CMG, due to the fact that the spin motor for rotating the flywheel and the motor for driving the gimbal were constructed as separate constituent parts, the structure was complicated and controllers corresponding to the two motors were necessitated, and so, reduction in size of the CMG was limited. Therefore, it is intended to resolve this problem in the prior art by applying the present invention.

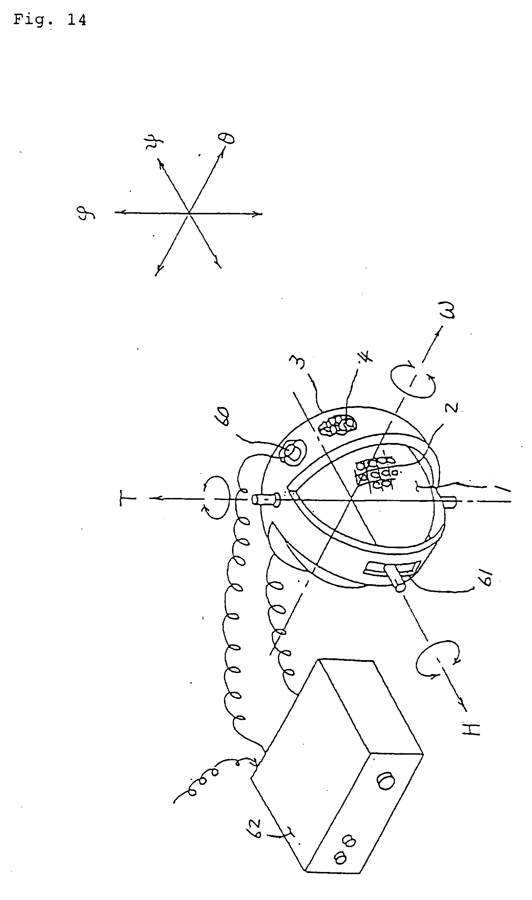

In Fig. 14, reference numeral 1 designates a spherical rotor which also serves as a flywheel. This spherical rotor 1 basically has a similar construction to that described previously with reference to Figs. 2 and 3. Reference numeral 3 designates a stator provided outside of the spherical rotor 1, and this also serves as a gimbal. The construction of this stator 3 is basically similar to the construction in the first preferred embodiment described above with reference to Figs. 4 and 5.

In addition, on the above-described spherical stator 3 is equipped a combined position detector and angular velocity detector 60 for detecting a position (ψ and θ positions) of the spherical rotor 1. Reference numeral 61 designates a rotary guide for limiting the direction of rotation of the spherical rotor 1 to about the ψ-axis and about the θ-axis, and this is fixed to the combined spherical stator and gimbal 3.

Reference numeral 62 designates a controller which controls the electric currents supplied to the electromagnets 4 on the basis of external or internal command signals and a feedback signal sent from the combined position detector and angular velocity detector 60 so that the spherical rotor 1 may take predetermined position and velocity. In addition, in the gap clearance between the spherical rotor 1 and the spherical stator 3 is formed a hydrostatic bearing to permit arbitrary rotation of the spherical rotor 1.

In the above-described construction, while external and internal command signals are being input to the controller 62 and a position (ψ-position and θ-position) signal of the spherical rotor 1 is being input from the combined position detector and angular velocity detector 60 to the controller 62, the controller 62 supplies electric currents to the respective electromagnets 4 of the spherical stator 3 to generate electromagnetic forces.

The above-described electromagnetic forces generated by the respective electromagnets 4 act upon magnetic pole elements 2 of the spherical rotor 1 and cause the spherical rotor 1 serving as a flywheel to rotate at a constant velocity about the ψ-axis, thereby an angular momentum H about the ψ-axis is generated, and also they cause the spherical rotor 1 to rotate at a given velocity about the θ-axis to generate an angular velocity vector ω about the θ-axis.

As a result, owing to a gyro-effect, a torque of T = H x ω is generated about the φ-axis, and the control moment gyro according to this preferred embodiment performs attitude control in an arbitrary space by making use of this torque.

In the CMG according to the above-described preferred embodiment, it becomes possible to reduce a size of an apparatus, to realize a high reliability and to simplify the apparatus, owing to the fact that a plurality of electromagnets are disposed on the inner surface side of the spherical stator and electric currents are supplied from a controller to the electromagnets so that electromagnetic forces generated by these electromagnets may act upon a plurality of magnetic pole elements provided on the outer surface of the spherical rotor to apply a torque to the spherical rotor, thereby a multi-freedom motor is formed, and in this multi-freedom motor, it is possible to realize common use of this multi-freedom motor as a spin motor for rotating a flywheel and as a motor for driving a gimbal.

### (Preferred Embodiment 8)

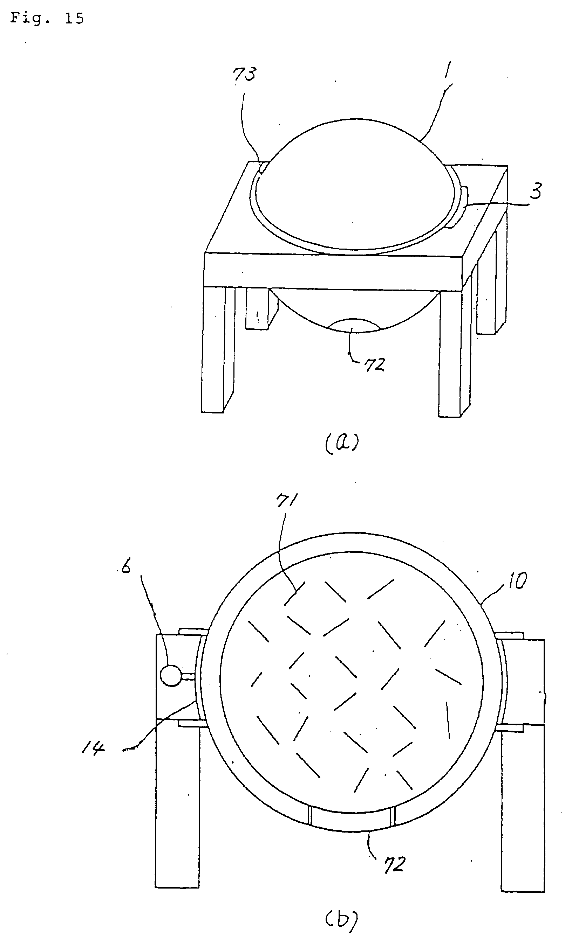

This preferred embodiment is a three-dimensional agitator making use of the principle of the multi-freedom electric motor according to the present invention. In Figs. 15(a) and 15(b), reference numeral 1 designates a hollow spherical rotor similar to the rotor of the multi-freedom motor in the first preferred embodiment, and onto the inner surface of this spherical rotor 1 are mounted blades or scrapers according to the purpose. In the illustrated embodiment, blades 71 are mounted onto the spherical inner surface of the spherical rotor 1. Reference numeral 3 designates a stator disposed outside of the above-mentioned spherical rotor 1 and having a plurality of electromagnets not shown disposed on its inner surface side, and the same electromagnets are connected to a controller not shown. Reference numeral 14 designates a spherical hydrostatic bearing provided on the inner surface of the above-mentioned stator 3, and this hydrostatic bearing 4 is pressurized by a gas pressure applied from a pressurized gas bomb 6 to hold the spherical rotor 1 in a non-contact manner. Reference numeral 72 designates an intake/exhaust port, and numeral 73 designates a seal member.

In the above-described construction, since the spherical rotor 1 is freely rotatable in any direction similarly to the case of the first preferred embodiment, by charging material to be agitated into the spherical rotor 1 through the intake/exhaust port 72 and rotating the spherical rotor 1 in the three-dimensional direction on the basis of an operation direction command signal sent from the controller, agitation of the material to be agitated can be done without causing unevenness, and an object can be achieved.

This preferred embodiment is characteristic in that an output shaft is unnecessary, and that a large output can be obtained because of a large rotor radius, and it can be adapted to material having a high viscosity.

While a principle of the present invention has been described above in connection to a number of preferred embodiments, it is a matter of course that many apparently widely different embodiments can be made without departing from the scope of the present invention, as defined by the appended claims.

## Claims

1. A multi-freedom electric motor having spherical motor means, including a rotor (1) having a plurality of permanent magnets (2) disposed on its outer surface so that the polarities of respective adjacent magnetic poles or groups of magnetic poles of the permanent magnets differ from one another, and a stator (3) provided on a certain part along the outer surface of said rotor (1) and having a plurality of electromagnets (4) disposed on its inner surface side as opposed to the permanent magnets (2) on the outer surface of said rotor (1), wherein:
provision is made such that said rotor (1) may be rotated about a displaceable rotary axis by controlling electric currents flowing through the respective electromagnets (4);
the surface of said rotor (1) is of completely true spherical shape, and
said electric motor includes a spherical bearing (5) coupled to said stator (3) for rotatably supporting the outer surface of said rotor (1),
characterized in that
said permanent magnets (2) are disposed contiguously in a lattice form and embedded in the surface of the rotor (1),
said rotor (1) has a position detector (7, 8) provided therein,
the direction of the magnetic field generated by the permanent magnets is a normal direction with respect to said rotor (1),
the polarities of adjacent magnetic poles of the permanent magnets (2) are reversed,
the electromagnets (4) are disposed in a lattice form with the intervals between them being chosen to be somewhat smaller than the intervals between the permanent magnets (2),
the direction of the magnetic field generated by the electromagnets (4) is a normal direction with respect to the stator, and
the feed of the electric currents flowing through the respective electromagnets (4) is turned on and off by a control signal based on a driving signal and a positional signal obtained from said position detector (7, 8).

2. A multi-freedom electric motor according to claim 1, wherein the electromagnets and the permanent magnets are interchanged.

3. A multi-freedom electric motor according to claim 1 or 2; characterized in that the rotor (1) is formed in a spherical shell shape, and a space is provided within the rotor (1).

4. A space stabilizer adapted to maintain an attitude of an article so as to be directed in a fixed direction regardless of attitude change of an apparatus on which said article is loaded; characterized in that said space stabilizer includes an electric motor as claimed in claim 1 having a space provided within said rotor (1), a gyro (32) disposed within said space, and a controller (43) responsive to a signal issued from said gyro (32) for transmitting an operation signal for rotating said spherical rotor (1) to a predetermined position to said stator (3).

5. A space stabilizer according to claim 4, characterized in that said spherical bearing (5) is a hydrostatic spherical bearing (14).

6. A space stabilizer according to claim 4 or 5, characterized in that a detector (31) for an electromagnetic wave, light or a sound wave is provided within said spherical rotor (1).

7. An emitter making use of the space stabilizer as claimed in claim 4 or 5, characterized in that an emitter of an electromagnetic wave, light, a sound wave or fluid or solid particles is provided within said spherical rotor (1).

8. A control moment gyro, wherein a flywheel is rotated about one of three axes orthogonal to one another, also said flywheel is rotated about another axis among said three axes, and thereby a torque is obtained about the remaining axis of said three axes; characterized in that said control moment gyro includes an electric motor as claimed in claim 1 in which said rotor (1) is used as said flywheel and said stator (3) is used as a gimbal, a controller having the electromagnets (4) of said stator (3) connected thereto, and support means for rotatably supporting the stator (3) of said electric motor.

9. An agitator including an agitating screw (23) having its bottom end pivotably supported within a inverse-conical container so as to be able to revolve along the inner surface of said container and also having its top end pivotably supported via an arm, characterized in that said agitator includes an electric motor as claimed in claim 1 provided at the bottom of the inside of said inverse-conical container (25), and a controller (8) having the electromagnets (4) in the stator (3) of said electric motor connected thereto, and the bottom end of said agitating screw (23) is coupled to the rotor (1) of said electric motor.

10. An agitating apparatus, in which material to be agitated is charged within a hollow spherical body, and said spherical body is supported by a supporting device having multi-freedom to be rotated, characterized in that said apparatus includes an electric motor as claimed in claim 1 having a space reserved within the rotor (1), agitating plates (71) provided on the inner surface of said rotor (1), an intake/exhaust port (72) provided in said rotor (1), and a controller (8) having the electromagnets in the stator (3) of said electric motor connected thereto.

## Patentansprüche

1. Mehrfreiheitsgrad-Elektromotor mit einer sphärischen Motoreinrichtung einschließlich eines Rotors (1) mit einer Vielzahl von Dauermagneten (2), die auf dessen Außenfläche so vorgesehen sind, daß die Polaritäten von jeweiligen benachbarten Magnetpolen oder Gruppen von Magnetpolen der Dauermagnete voneinander abweichen, und eines Stators (3), der auf einem bestimmten Teil längs der Außenfläche des Rotors (1) vorgesehen ist und eine Vielzahl von Elektromagneten (4) aufweist, die auf dessen Innenflächenseite gegenüber zu den Dauermagneten (2) auf der Außenfläche des Rotors (1) angeordnet sind, wobei:
eine Anordnung getroffen ist derart, daß der Rotor (1) sich um eine verschiebbare Drehachse durch Steuern der durch die jeweiligen Elektromagneten (4) fließenden elektrischen Ströme drehen kann,
die Oberfläche des Rotors (1) eine vollständig wahre sphärische Gestalt hat, und
der Elektromotor ein sphärisches Lager (5) aufweist, das mit dem Stator (3) gekoppelt ist, um die Außenfläche des Rotors (1) drehbar zu tragen, dadurch gekennzeichnet, daß die Dauermagneten (2) angrenzend in einer Gitterform und eingebettet in die Oberfläche des Rotors (1) vorgesehen sind,
der Rotor (1) einen darin vorgesehenen Positionsdetektor (7, 8) hat,
die Richtung des durch die Dauermagneten erzeugten Magnetfeldes eine normale Richtung bezüglich des Rotors (1) ist,
die Polaritäten der benachbarten Magnetpole der Dauermagneten (2) umgekehrt sind,
die Elektromagneten (4) in einer Gitterform angeordnet sind, wobei die Intervalle zwischen diesen etwas kleiner als die Intervalle zwischen den Dauermagneten (2) gewählt sind,
die Richtung des durch die Elektromagneten (4) erzeugten Magnetfeldes eine Normalrichtung bezüglich des Stators ist, und
die Einspeisung der elektrischen Ströme, die durch die jeweiligen Elektromagneten (4) fließen, durch ein Steuersignal aufgrund eines Ansteuersignales und eines Lagesignales, erhalten von dem Positionsdetektor (7, 8), ein- und ausgeschaltet wird.

2. Mehrfreiheitsgrad-Elektromotor nach Anspruch 1, bei dem die Elektromagneten und die Dauermagneten vertauscht sind.

3. Mehrfreiheitsgrad-Elektromotor nach Anspruch 1 oder 2, dadurch gekennzeichnet, daß der Rotor (1) in einer sphärischen Schalengestalt gebildet ist, und daß ein Raum innerhalb des Rotors (1) vorgesehen ist.

4. Raumstabilisator, der geeignet ist, eine Haltung eines Artikels beizubehalten, um in einer festen Richtung unabhängig von einer Haltungsänderung eines Gerätes gerichtet zu sein, auf das der Artikel geladen ist, dadurch gekennzeichnet, daß der Raumstabilisator einen Elektromotor umfaßt, wie dieser im Patentanspruch 1 angegeben ist, wobei ein Raum innerhalb des Rotors (1) vorgesehen ist, ein Gyroskop (32) innerhalb des Raumes angeordnet ist, und ein Controller (43) auf ein Signal anspricht, das von dem Gyroskop (32) ausgegeben ist, um ein Betriebssignal zum Drehen des sphärischen Rotors (1) in eine vorbestimmte Stellung zu dem Stator (3) zu übertragen.

5. Raumstabilisator nach Anspruch 4, dadurch gekennzeichnet, daß das sphärische Lager (5) ein hydrostatisches sphärisches Lager (14) ist.

6. Raumstabilisator nach Anspruch 4 oder 5, dadurch gekennzeichnet, daß ein Detektor (31) für eine elektromagnetische Welle, Licht oder eine Schallwelle innerhalb des sphärischen Rotors (1) vorgesehen ist.

7. Sender, der den Raumstabilisator nach Anspruch 4 oder 5 verwendet, dadurch gekennzeichnet, daß ein Sender einer elektromagnetischen Welle, Licht, einer Schallwelle oder eines Fluids oder fester Partikel innerhalb des sphärischen Rotors (1) vorgesehen ist.

8. Steuermoment-Gyroskop, bei dem ein Schwungrad um eine von drei senkrecht zueinander liegenden Achsen drehbar ist, wobei dieses Schwungrad auch um eine andere Achse unter den drei Achsen drehbar ist, um dadurch ein Drehmoment um die verbleibende Achse der drei Achsen zu erhalten, dadurch gekennzeichnet, daß das Steuermoment-Gyroskop einen Elektromotor aufweist, wie dieser im Patentanspruch 1 angegeben ist, wobei der Rotor (1) als das Schwungrad verwendet wird und der Stator (3) als ein Kardanrahmen verwendet wird, ein Controller die Elektromagneten (4) des Stators (3) hier angeschlossen hat und eine Trageinrichtung drehbar den Stator (3) des Elektromotores trägt.

9. Agitator mit einer Rührschraube (23), deren Bodenende schwenkbar innerhalb eines invers konischen Behälters gelagert ist, um längs der Innenfläche des Behälters umlaufen zu können, und deren oberes Ende schwenkbar über einen Arm gelagert ist, dadurch gekennzeichnet, daß der Agitator einen Elektromotor nach Anspruch 1, der an dem Boden der Innenseite des invers konischen Behälters (25) vorgesehen ist, und einen Controller (8), mit dem die Elektromagneten (4) in dem Stator (3) des Elektromotores verbunden sind, aufweist, wobei das Bodenende der Rührschraube (23) mit dem Rotor (1) des Elektromotores gekoppelt ist.

10. Agitatorvorrichtung, bei der zu rührendes Material in einen hohlen sphärischen Körper geladen ist, der durch eine Tragvorrichtung getragen ist, welche mehrere Freiheitsgrade hat, um gedreht zu werden, dadurch gekennzeichnet, daß die Vorrichtung einen Elektromotor nach Patentanspruch 1 aufweist, wobei ein Raum innerhalb des Rotors (1) reserviert ist, Rührplatten (71) auf der Innenfläche des Rotors (1) vorgesehen sind, eine Eingabe/Ausgabeöffnung (72) in dem Rotor (1) vorhanden ist, und ein Controller (8) mit den Elektromagneten in dem Stator (3) des Elektromotores hieran angeschlossen ist.

## Revendications

1. Moteur électrique à libertés multiples comportant des moyens à moteur sphérique, comprenant un rotor (1) sur la surface extérieure duquel sont disposés une pluralité d'aimants permanents (2) de telle manière que les polarités des pôles magnétiques ou groupes de pôles magnétiques adjacents des aimants permanents diffèrent entre elles, et un stator (3) prévu sur une certaine partie le long de la surface extérieure dudit rotor (1) et sur la surface intérieure duquel sont disposés une pluralité d'électroaimants (4) en regard des aimants permanents (2) de la surface extérieure dudit rotor (1), dans lequel :
il est prévu que ledit rotor (1) puisse être entraîné en rotation autour d'un axe de rotation déplaçable en commandant les courants électriques traversant les électroaimants respectifs (4 ) ,
la surface dudit rotor (1) est d'une forme parfaitement sphérique, et
ledit moteur électrique comporte un palier sphérique (5) couplé audit stator (3) pour supporter à rotation la surface extérieure dudit rotor (1),
caractérisé en ce que
lesdits aimants permanents (2) sont disposés de manière contiguë suivant une forme en treillis et sont encastrés dans la surface du rotor (1),
ledit rotor (1) est pourvu intérieurement d'un détecteur de position (7,8),
la direction du champ magnétique engendré par les aimants permanents est une direction normale par rapport audit rotor (1),
les polarités des pôles magnétiques adjacents des aimants permanents (2) sont inversées,
les électroaimants (4) sont disposés suivant une forme en treillis, les intervalles entre eux étant choisis pour être quelque peu inférieurs aux intervalles entre les aimants permanents (2) ,
la direction du champ magnétique engendrée par les électroaimants (4) est une direction normale par rapport au stator, et
la fourniture et l'interruption des courants électriques traversant lees électroaimants respectifs (4) sont effectuées par un signal de commande sur la base d'un signal d'entraînement et d'un signal de position obtenu à partir dudit détecteur de position (7,8).

2. Un moteur électrique à libertés multiples selon la revendication 1, dans lequel les électroaimants et les aimants permanents sont intervertis.

3. Un moteur électrique à libertés multiples selon la revendication 1 ou 2, caractérisé en ce que le rotor (1) est constitué sous la forme d'une coquille sphérique et un espace est prévu à l'intérieur du rotor (1).

4. Un stabilisateur spatial agencé pour maintenir l'attitude d'un article de manière qu'il soit dirigé dans une direction fixe indépendamment d'une variation d'attitude d'un appareil sur lequel ledit article est chargé, caractérisé en ce que ledit stabilisateur spatial comporte un moteur électrique tel que revendiqué dans la revendication 1, présentant un espace prévu à l'intérieur dudit rotor (1), un gyroscope (32) disposé à l'intérieur dudit espace, et un dispositif de commande (43) sensible à un signal provenant dudit gyroscope (32) pour émettre un signal de fonctionnement vers ledit stator (3) pour faire tourner ledit rotor sphérique (1) jusqu'à une position prédéterminée.

5. Un stabilisateur spatial selon la revendication 4, caractérisé en ce que ledit palier sphérique (5) est un palier sphérique hydrostatique (14).

6. Un stabilisateur spatial selon la revendication 4 ou 5, caractérisé en ce qu'un détecteur (31) pour une onde électromagnétique, de la lumière ou une onde sonore est prévu à l'intérieur dudit rotor sphérique.

7. Un émetteur faisant utilisation du stabilisateur spatial tel que revendiqué dans la revendication 4 ou 5, caractérisé en ce qu'un émetteur d'onde électromagnétique, de la lumière, une onde sonore ou des particules fluides ou solides est prévu à l'intérieur dudit rotor sphérique (1).

8. Un gyroscope à moment de commande, dans lequel un volant d'inertie est entraîné en rotation autour de l'un de trois axes ortogonaux l'un par rapport à l'autre, ledit volant d'inertie étant également entraîné en rotation autour d'un autre axe parmi lesdits trois axes, de sorte qu'un couple est obtenu autour de l'axe restant desdits trois axes; caractérisé en ce que ledit gyroscope à moment de commande comporte un moteur électrique tel que revendiqué dans la revendication 1, dans lequel ledit rotor (1) est utilisé en tant que ledit volant d'inertie et ledit stator (3) est utilisé comme fourchette, un dispositif de commande auquel sont reliés les électroaimants (4) dudit stator (3), et des moyens de support supportant à rotation le stator (3) dudit moteur électrique.

9. Un agitateur comportant une vis d'agitation (23) dont l'extrémité inférieure est supportée à rotation à l'intérieur d'un récipient en forme de cône renversé, de manière à être capable d'orbiter le long de la surface intérieure dudit récipient, et dont également l'extrémité supérieure est supportée à rotation par l'intermédiaire d'un bras, caractérisé en ce que ledit agitateur comporte un moteur électrique tel que revendiqué dans la revendication 1, prévu à la partie inférieure de l'intérieur dudit récipient (25) en cône renversé, et un dispositif de commande (8) auquel sont reliés les électroaimants (4) du stator (3) dudit moteur électrique, et l'extrémité inférieure de ladite vis d'agitation (23) est couplée au rotor (1) dudit moteur électrique.

10. Un appareil d'agitation, dans lequel la matière à agiter est introduite à l'intérieur d'un corps sphérique creux, et ledit corps sphérique est supporté par un dispositif de support présentant des libertés multiples pour être entraîné en rotation, caractérisé en ce que ledit appareil comporte un moteur électrique tel que revendiqué dans la revendication 1, présentant un espace réservé à l'intérieur du rotor (1), des plaques d'agitation (71) prévues sur la surface intérieure dudit rotor (1), et un orifice (72) d'entrée/sortie prévu dans ledit rotor (1), un dispositif de commande (8) auquel sont reliés les électroaimants du stator (3) dudit moteur électrique.
